# EUROPÄISCHE PATENTSCHRIFT

(11) **EP 0 597 319 B1**
(45) Veröffentlichungstag und Bekanntmachung des Hinweises auf die Patenterteilung: **02.01.1997**
(21) Anmeldenummer: 93117376.9
(22) Anmeldetag: 27.10.1993
(51) Int. Cl.: C09D 123/14

(54) **Verfahren zur Herstellung von Polypropylenhäuten**
Process for the manufacture of polypropylene coatings
Procédé pour la fabrication de revêtements à base de polypropylène

(30) Priorität: 07.11.1992 DE 4237637
(43) Veröffentlichungstag der Anmeldung: 18.05.1994
(73) Patentinhaber: BASF Aktiengesellschaft, 67063 Ludwigshafen (DE)
(72) Erfinder: Mueller, Patrik, Dr., D-67661 Kaiserslautern (DE); Schwager, Harald, Dr., D-67346 Speyer (DE)

(56) Entgegenhaltungen:
- EP-A- 0 135 834
- EP-A- 0 316 692
- EP-A- 0 479 580

## Beschreibung

Die vorliegende Erfindung betrifft ein Verfahren zur Herstellung von Polypropylenhäuten aus Polypropylenpartikeln einer maximalen mittleren Korngröße von bis zu 1,0 mm.

Weiterhin betrifft die vorliegende Erfindung die Verwendung der aus dem Verfahren erhaltenen Polypropylenhäute als Überzugsmaterialien.

Polymerhäute werden in vielen Bereichen in steigendem Umfang als Überzugsmaterialien verwendet. Im Automobilbereich beispielsweise werden sie als Überzüge für Armaturentafeln und Armlehnen eingesetzt. Zusammen mit einem steifen Träger, der u.a. ein Terpolymerisat aus Acrylnitril, Butadien und Styrol (ABS) oder aber ein Stahlblech sein kann, werden die Polymerhäute mit Polyurethanen ausgeschäumt und als Mehrkomponentenverbund eingesetzt. Zur Zeit werden für derartige Zwecke überwiegend Polymerhäute aus Polyvinylchlorid (PVC) verwendet, da PVC eine gute Haftung auf die dabei eingesetzten Trägermaterialien aufweist und sich darüber hinaus durch gute mechanische Eigenschaften auszeichnet. Derartige Polymerhäute aus PVC werden vorwiegend nach dem Slushverfahren hergestellt, welches auch Pulversinterverfahren genannt wird (Becker-Braun, "Kunststoffhandbuch", Verlag Carl Hanser, München, Band 2, Teil II; DE-OS 40 29 254).

Um die Wiederverwertbarkeit von Verbrauchsgegenständen zu erhöhen, sind Bestrebungen im Gange, diese aus möglichst einheitlichen Stoffen herzustellen. Im Automobilbereich bedeutet dies beispielsweise, daß Automobile aus möglichst wenigen unterschiedlichen Stoffen aufgebaut sein sollen, die nach der Wiederverwertung als sortenreine Materialien anfallen. Vor diesem Hintergrund ist geplant, praktisch alle Kunststoffteile im Automobilbereich einheitlich aus Polymerisaten des Propylens aufzubauen. Aus diesem Grund sollen auch die bisher aus PVC bestehenden Polymerhäute in Zukunft durch Polymerhäute aus Polymerisaten des Propylens ersetzt werden. Zur Vermeidung von größeren Umstellungsschwierigkeiten bei den Automobilzulieferern wird von den anstelle des PVC verwendeten Polymerisaten des Propylens u.a gefordert, ebenfalls nach dem Slushverfahren zu Polymerhäuten verarbeitbar zu sein.

Der vorliegenden Erfindung lag daher die Aufgabe zugrunde, das bisher bekannte Slushverfahren zur Herstellung von Polymerhäuten dahingehend abzuwandeln, daß dieses auch zur Verarbeitung von Polymerisaten des Propylens geeignet ist.

Demgemäß wurde ein neues Verfahren zur Herstellung von Polypropylenhäuten aus Polypropylenpartikeln einer maximalen mittleren Korngröße von bis zu 1,0 mm entwickelt, daß dadurch gekennzeichnet ist, daß als Polymere Copolymerisate des Propylens mit einem DSC-Schmelzpunkt von 135 bis 165°C und einem Schmelzflußindex von 2 bis 70 g/10 min, bei 230°C und unter einem Gewicht von 2,16 kg verwendet werden, die wiederum aus einem Polymerisat des Propylens (A) mit bis zu 5,0 Gew.-% einpolymerisierten C₂- bis C₁₀-Alk-1-enen und einem Copolymerisat des Propylens (B) mit 10 bis 70 Gew.-% einpolymerisierten C₂- bis C₁₀-Alk-1-enen bestehen.

Das Slushverfahren (Pulversinterverfahren) ist in allen wichtigen Einzelheiten aus Becker-Braun "Kunststoffhandbuch", Verlag Carl Hanser, München, Band 2, Teil II, sowie aus der DE-OS 40 29 254 bekannt, so daß bezüglich einer genauen Beschreibung auf diese Publikationen verwiesen werden kann. Üblicherweise werden die dabei verarbeiteten Polymere zunächst in geeigneten Mahlvorrichtungen, beispielsweise in einer Hammermühle zu einer maximalen mittleren Korngröße von 1,0 mm vermahlen. Bevorzugt sind dabei Korngrößen von nicht mehr als 0,5 mm. Die Vermahlung erfolgt vorzugsweise unter Kühlung, beispielsweise mit flüssigem Stickstoff auf Temperaturen von -196 bis 0°C, insbesondere von -120 bis -30°C. Anschließend werden die auf diese Weise erhaltenen gemahlenen Polymere in eine Sinterform gebracht, die rotierbar ist. Durch möglichst gleichmäßige Rotation der Sinterform wird dabei erreicht, daß sich das Polymere als feinverteilte Polymerhaut an der auf 180 bis 330°C aufgeheizten Formfläche verteilt und ablagert. Der sich daran anschließende eigentliche Sintervorgang erfolgt vorzugsweise bei Temperaturen von 180 bis 350°C und Verweilzeiten des Polymeren von 0 bis 10 Minuten. Danach wird das gesinterte Polymere geliert, auf etwa 20 bis 80°C abgekühlt und durch Entformung aus der Form genommen. Die Entformung wird dabei vorzugsweise mit Hilfe geeigneter Trennvorrichtungen, beispielsweise durch Trennschneider durchgeführt. Das aus der Sintervorrichtung entnommene Polymere fällt dabei als 0,01 bis 3 mm dicke Polymerhaut an.

Erfindungsgemäß wird das Slushverfahren zur Herstellung von Polymerhäuten dahingehend weiterentwickelt, daß als Polypropylen Copolymerisate des Propylens mit einem DSC-Schmelzpunkt von 135 bis 165°C, insbesondere von 140 bis 155°C und einem Schmelzflußindex von 2 bis 70 g/10 min, insbesondere von 5 bis 40 g/10 min, bei 230°C und unter einem Gewicht von 2,16 kg, nach DIN 53 735 verwendet werden. Der Schmelzflußindex entspricht dabei der Menge an Polymerisat, die aus der nach DIN 53 735 genormten Prüfvorrichtung bei einer Temperatur von 230°C und unter einem Gewicht von 2,16 kg innerhalb von 10 Minuten ausgetragen wird. Bevorzugt werden dabei solche Copolymerisate des Propylens verwendet, die eine Shore A-Härte von 50 bis eine Shore D-Härte von 45 aufweisen.

Die erfindungsgemäß zu verwendenden Copolymerisate des Propylens bestehen dabei aus einem Polymerisat des Propylens (A) mit bis zu 5,0 Gew.-% einpolymerisierten C₂- bis C₁₀-Alk-1-enen und einem Copolymerisat des Propylens (B) mit 10 bis 70 Gew.-% einpolymerisierten C₂- bis C₁₀-Alk-1-enen. Für das Slushverfahren werden bevorzugt solche Copolymerisate des Propylens verwendet, die aus 10 bis 80 Gew.-%, insbesondere aus 20 bis 70 Gew.-% Polymerisat (A) und aus 20 bis 90 Gew.-%, insbesondere aus 30 bis 80 Gew.-% Copolymerisat (B) bestehen. Besonders bevorzugte Copolymerisate des Propylens enthalten 30 bis 60 Gew.-% Polymerisat (A) und 40 bis 70 Gew.-% Copolymerisat (B).

Unter der Bezeichnung Polymerisat des Propylens (A) sollen neben Propylenhomopolymerisaten insbesondere auch Polymerisate des Propylens mit bis zu 5,0 Gew.-% einpolymerisierten C₂- bis C₁₀-Alk-1-enen verstanden werden, wobei besonders bevorzugte Polymerisate des Propylens (A) 0,01 bis 4,5 Gew.-% einpolymerisierte C₂- bis C₁₀-Alk-1-ene enthalten. Als C₂- bis C₁₀-Alk-1-ene werden dabei vor allem Ethylen, But-1-en, Pent-1-en, Hex-1-en, Hept-1-en und Oct-1-en verstanden, wobei Ethylen, But-1-en und Hex-1-en bevorzugt sind. Es können auch Gemische zweier unterschiedlicher C₂-bis C₁₀-Alk-1ene im Polymerisat des Propylens (A) enthalten sein. Als besonders bevorzugtes C₂- bis C₁₀-Alk-1-en wird Ethylen eingesetzt.

Die Copolymerisate des Propylens (B) enthalten üblicherweise 10 bis 70 Gew.-%, insbesondere 20 bis 60 Gew.-% einpolymerisierte C₂-bis C₁₀-Alk-1-ene. Besonders bevorzugte Copolymerisate des Propylens (B) weisen Anteile einpolymerisierter C₂- bis C₁₀-Alk-1-ene von 30 bis 50 Gew.-% auf. Als C₂- bis C₁₀-Alk-1-ene sollen auch hier vor allem Ethylen, But-1-en, Pent-1-en, Hex-1-en, Hept-1-en und Oct-1-en verstanden werden, wobei insbesondere Ethylen, But-1-en und Hex-1-en bevorzugt sind. Es können auch zwei unterschiedliche C₂- bis C₁₀-Alk-1-ene im Copolymerisat des Propylens (B) enthalten sein. Besonders bevorzugte Copolymerisate (B) weisen einen Ethylengehalt von 20 bis 60 Gew.-% auf.

Derartige Polymerisate (A) und (B) werden üblicherweise durch Polymerisation mit Hilfe von Ziegler-Natta-Katalysatoren hergestellt. Die zu diesen Polymerisaten (A) und (B) führenden Polymerisationsverfahren können absatzweise oder kontinuierlich, sowohl in der Gasphase, in einer Aufschlämmung als auch in Lösung durchgeführt werden. Die dabei eingesetzten Ziegler-Natta-Katalysatoren enthalten u.a. neben einer titanhaltigen Feststoffkomponente noch eine Aluminium- und eine Elektronendonorkomponente.

Zur Herstellung der titanhaltigen Feststoffkomponente werden im allgemeinen Halogenide oder Alkoholate des drei- oder vierwertigen Titans verwendet, wobei die Chloride des Titans, insbesondere Titantetrachlorid, bevorzugt sind. Üblicherweise wird die titanhaltige Feststoffkomponente auf einem möglichst feinteiligen Träger aufgebracht, wobei sich Siliciumoxide, Aluminiumoxide, sowie Aluminiumsilicate der Bruttoformel SiO₂·aAl₂O₃, wobei a für einen Wert von 0,01 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weitere Bestandteile der titanhaltigen Feststoffkomponente sind u.a. Verbindungen des Magnesiums. Als solche kommen neben Magnesiumhalogeniden, Magnesiumalkylen und Magnesiumarylen auch Magnesiumalkoxy- und Magnesiumaryloxyverbindungen in Betracht, wobei insbesondere Magnesiumdichlorid, Magnesiumdibromid und Magnesiumdi-(C₁-C₁₀-alkyl)-Verbindungen verwendet werden. Daneben enthält die titanhaltige Feststoffkomponente ein Halogen, bevorzugt Chlor oder Brom.

Neben den drei- oder vierwertigen Titanverbindungen, dem Träger, der Magnesiumverbindung und dem Halogen enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 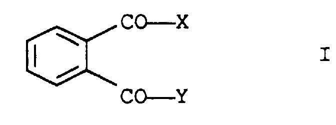 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren. sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der US-A 4 857 613 und der GB-A 2 111 066 beschrieben.

Als Aluminiumkomponente kommen neben Trialkylaluminium auch solche Verbindungen in Betracht, bei denen ein Alkylsubstituent durch eine Alkoxygruppe oder durch ein Halogen, wie Chlor oder Brom, ersetzt ist. Bevorzugt werden Trialkylaluminiumverbindungen verwendet, deren Substituenten jeweils 1 bis 8 C-Atome aufweisen, beispielsweise Trimethyl-, Triethyl- oder Methyldiet-hylaluminium.

Neben der titanhaltigen Feststoffkomponente und der Aluminiumkomponente enthalten derartige Katalysatorsysteme als weitere eigenständige Katalysatorkomponente noch Elektronendonorverbindungen wie mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonoren sind siliciumorganische Verbindungen der allgemeinen Formel II

R¹nSi(OR²)₄₋ₙ II,

wobei R¹ gleich oder verschieden ist und eine C₁- bis C₂₀-Alkylgruppe, eine 5- bis 7-gliedrige Cycloalkylgruppe, die ihrerseits eine C₁-bis C₁₀-Alkylgruppe tragen kann, oder eine C₄- bis C₂₀-Aryl- oder Arylalkylgruppe bezeichnet, R² gleich oder verschieden ist und eine C₁- bis C₂₀-Alkylgruppe bedeutet und n für 1 bis 3 steht. Besonders bevorzugt werden dabei solche Verbindungen, in denen R¹ eine C₁- bis C₈-Alkylgruppe oder eine 5- bis 7-gliedrige Cycloalkylgruppe, R² eine C₁- bis C₄-Alkylgruppe und n 1 oder 2 bedeuten.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumkomponente und Titan aus der titanhaltigen Feststoffkomponente 10:1 bis 800:1, insbesondere 20:1 bis 200:1, und das Molverhältnis zwischen der Aluminiumkomponente und der Elektronendonorkomponente 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die Herstellung des Polymerisats (A) erfolgt üblicherweise durch Polymerisation mit Hilfe von Ziegler-Natta-Katalysatoren bei Temperaturen von 50 bis 100°C, Drücken von 10 bis 40 bar und mittleren Verweilzeiten des Reaktionsgemisches von 1 bis 5 Stunden. Bevorzugt wird die Herstellung des Polymerisats (A) bei Temperaturen von 60 bis 90°C, Drücken von 15 bis 30 bar und mittleren Verweilzeiten des Reaktionsgemisches von 1,5 bis 4 Stunden durchgeführt. Für den Fall, daß es sich bei dem Polymerisat (A) um ein Copolymerisat des Propylens mit bis zu 5,0 Gew.-% einpolymerisierten C₂- bis C₁₀-Alk-1-enen handelt, sollte das Verhältnis der Partialdrücke zwischen Propylen und dem oder den C₂- bis C₁₀-Alk-1-enen im Bereich von etwa 20:1 bis 1000:1 liegen. Die Molmasse des dabei erhaltenen Polymerisats (A) kann wie üblich durch Zugabe von Reglern, insbesondere von Wasserstoff kontrolliert werden.

Die Herstellung der Copolymerisate (B) wird in der Regel unter analogen Verfahrensbedingungen durchgeführt wie die des Polymerisats (A). Das Verhältnis der Partialdrücke zwischen Propylen und dem oder den C₂- bis C₁₀-Alk-1-enen liegt jedoch in diesem Fall im Bereich von etwa 0,1:1 bis 10:1. Wie üblich kann die Molmasse des Copolymerisats (B) durch Zugabe von Reglern, beispielsweise von Wasserstoff gesteuert werden.

Das Polymerisationsverfahren zur Herstellung der Polymerisate (A) und (B) kann in den in der Technik üblichen Reaktoren, beispielsweise in gerührten Autoklaven oder in einer Reaktorkaskade durchgeführt werden. Dabei erweist er sich als vorteilhaft, wenn in einer zweistufigen Reaktorkaskade zunächst in der ersten Polymerisationsstufe das Polymerisat (A) und anschließend nach Überführung des Polymerisats (A) in die zweite Polymerisationsstufe dort das Copolymerisat (B) hergestellt wird. Gegebenenfalls kann die Herstellung des Polymerisats (A) oder (B) auch in mehreren Stufen erfolgen. Die Reihenfolge der Herstellung von (A) und (B) kann auch umgedreht werden. Durch die aufeinanderfolgende Herstellung der Polymerisate (A) und (B) in einer mehrstufigen Reaktorkaskade läßt sich die Herstellung der im erfindungsgemäßen Verfahren eingesetzten Copolymerisate des Propylens auf einfache und sehr effektive Weise durchführen.

Darüber hinaus sind die Copolymerisate des Propylens, die im erfindungsgemäßen Verfahren zur Herstellung von Polypropylenhäuten verwendet werden, auch dadurch erhältlich, daß man die Polymerisate (A) und (B) in geeigneten Mischvorrichtungen, beispielsweise in Extrudern, Knetern oder Mühlen miteinander innig vermengt. Die jeweils einzuhaltenden Mischbedingungen hängen in der Regel deutlich von den dabei eingesetzten Mischvorrichtungen ab und sind dem durchschnittlichen Fachmann geläufig.

Weiterhin kann das erfindungsgemäße Verfahren so ausgestaltet werden, das die Copolymerisate des Propylens noch mit 0,01 bis 5,0 Gew.-%, insbesondere 0,1 bis 2 Gew.-% eines Wärmestabilisators und 0,01 bis 5 Gew.-%, insbesondere 0,05 bis 1 Gew.-% eines Farbstoffpigmentes vermengt werden. Dabei bezieht sich die Angabe Gew.-% jeweils auf die Gesamtmenge Copolymerisat. Als Wärmestabilisatoren werden zu diesem Zweck insbesondere Trialkyl- oder Triarylphosphite, beispielsweise Tris-(2,4-ditert.-butylphenyl)phosphit verwendet.

Für diesen Zweck geeignete Farbstoffpigmente sind beispielsweise Azofarbstoffe wie Toluidinrot, Triphenylmethanfarbstoffe wie Malachitgrün, Xanthinpigmente wie Rhodamin, Phthalocyanine wie Phthalocyaninblau, ferner Thiazolpigmente, Antraquinonpigmente oder Alkalipigmente. Zu den Farbstoffpigmenten zählen üblicherweise auch sogenannte anorganische Pigmente, beispielsweise Oxide des Titans, des Eisens, des Zinks, des Bleis oder des Antimons, sowie Sulfide oder Chromate verschiedener Metalle. Als Farbstoffpigment kann auch Ruß verwendet werden. Das Zumischen der Wärmestabilisatoren und der Farbstoffpigmente kann in den üblichen Mischungsvorrichtungen erfolgen, beispielsweise in Extrudern, Knetern oder Mischern.

Nach einer bevorzugten Variante des erfindungsgemäßen Verfahrens werden die verwendeten Polypropylene zunächst bis zur maximalen mittleren Korngröße von bis zu 1,0 mm gemahlen und anschließend in eine Sinterform gebracht, wobei sich das Polypropylen durch Roation der Form an der beheizten Formfläche verteilt und ablagert. Danach wird das so behandelte Polypropylen noch gesintert, geliert, abgekühlt und durch Entformen aus der Form entnommen.

Das erfindungsgemäße Verfahren läßt sich ohne großen Verfahrensaufwand in den für das Slushverfahren üblicherweise verwendeten Vorrichtungen durchführen. Es ist gut steuerbar und liefert Polypropylenhäute aus Copolymerisaten des Propylens, die den Polymerhäuten des PVC's hinsichtlich ihrer anwendungstechnischen Eigenschaften nicht nachstehen. Die mit Hilfe des erfindungsgemäßen Verfahren erhältlichen Polypropylenhäute können u.a. als Überzugsmaterialien, insbesondere für den Automobilbereich verwendet werden.

### Beispiele 1 bis 5

### I. Herstellung eines Copolymerisats des Propylens

In allen Beispielen 1 bis 5 wurde in zwei hintereinander geschalteten Rührautoklaven mit einem Nutzvolumen von jeweils 180 l zunächst im ersten Autoklaven das Polymerisat (A) und anschließend im zweiten Autoklaven das Copolymerisat (B) hergestellt. Die Polymerisation wurde dabei in der Gasphase bei Temperaturen von etwa 70 bis 80°C, Drücken von etwa 25 bis 35 bar und mittleren Verweilzeiten von 2 bis 3 Stunden pro Autoklav durchgeführt. Als Ziegler-Natta-Katalysator wurden pro Stunde 1 g einer titanhaltigen Feststoffkomponente, 60 mmol Triethylaluminium und 6 mmol Dimethoxyisobutylisopropylsilan als Katalysatorbestandteile verwendet. Nähere Einzelheiten der Herstellung sind u.a. der DE-OS 40 11 160 und der DE-OS 40 04 087 zu entnehmen.

Man erhielt dabei als Polymerisat (A) ein Copolymerisat des Propylens mit bis zu 4,5 Gew.-% einpolymerisiertem Ethylen und als Copolymerisat (B) ein Copolymerisat des Propylens mit 10 bis 50 Gew.-% einpolyinerisiertem Ethylen. Die genauen Ethylengehalte der Polymerisate (A) und (B) können ebenso wie deren Anteile am Gesamtcopolymerisat, dessen Schmelzpunkt und dessen Schmelzflußindex für alle Beispiele 1 bis 5 der nachfolgenden Tabelle entnommen werden.

**Tabelle**

| Eigenschaften der verwendeten Copolymerisate des Propylens | | | | | |
|---|---|---|---|---|---|
| | Beispiele | | | | |
| | 1 | 2 | 3 | 4 | 5 |
| Anteil Polymerisat (A) [Gew.-%] | 55 | 55 | 55 | 55 | 55 |
| Ethylengehalt von (A) [Gew.-%] | 2,5 | 2,5 | 2,5 | 2,5 | 3,5 |
| Anteil Copolymerisat (B) [Gew.-%] | 45 | 45 | 45 | 45 | 45 |
| Ethylengehalt von (B) [Gew.-%] | 10 | 20 | 40 | 50 | 40 |
| DSC-Schmelzpunkt [°C] | 145 | 146 | 145.5 | 145 | 140 |
| Schmelzflußindex [g/10 min, nach DIN 53 735, 230°C und 2,16 kg] | 3,0 | 5,0 | 10 | 20 | 16 |

### II. Verarbeitung der aus I erhaltenen Copolymerisate des Propylens nach dem Slushverfahren

Das aus I erhaltene Copolymerisat des Propylens bestehend aus dem Polymerisat (A) und dem Copolymerisat (B) wurde mit 0,25 Gew.-%, bezogen auf die Gesamtmenge des Copolymerisat, Ruß und 0,5 Gew.-%, bezogen auf die Gesamtmenge des Copolymerisat, Tris-(2,4-ditert.-butylphenyl)phosphit als Wärmestabilisator versetzt und im Extruder homogenisiert. Anschließend wurde das daraus erhaltene Granulat mit Hilfe einer Hammermühle unter Kühlung mit flüssigem Stickstoff bei -80°C auf eine maximale Korngröße von weniger als 0,5 mm gemahlen.

Das auf diese Weise erhaltene Copolymerpulver wurde danach in eine auf 300°C vorgeheizte Sinterform aus Nickel eingebracht, die anschließend mit einem Deckel fest verschlossen wurde. Durch 2-minütiges Drehen bei einer Innentemperatur von 250°C wurde die gesamte Oberfläche im Inneren der Sinterform getempert. Während dieser Zeit lagerte sich das Polymerpulver als dünne Haut an der Oberfläche der Form ab. Nach Gelieren und Abkühlen auf 25°C konnte die Polymerhaut abgezogen werden.

In allen Beispielen 1 bis 5 erhielt man auf diese Weise eine geschlossene Polypropylenhaut aus Copolymerisaten des Propylens mit einer Dicke von 0,5 bis 2,0 mm. Die mit Hilfe des erfindungsgemäßen Verfahrens erhaltene Polypropylenhaut zeigte vergleichbar gute Eigenschaften wie Polymerhäute aus PVC, insbesondere hinsichtlich ihrer Recyclierbarkeit.

## Patentansprüche

1. Verfahren zur Herstellung von Polypropylenhäuten aus Polypropylenpartikeln einer maximalen mittleren Korngröße von bis zu 1,0 mm, dadurch gekennzeichnet, daß als Polypropylen Copolymerisate des Propylens mit einem DSC-Schmelzpunkt von 135 bis 165°C und einem Schmelzflußindex von 2 bis 70 g/10 min., bei 230°C und unter einem Gewicht von 2,16 kg verwendet werden, die wiederum aus einem Polymerisat des Propylens (A) mit bis zu 5,0 Gew.-% einpolymerisierten C₂- bis C₁₀-Alk-1-enen und einem Copolymerisat des Propylens (B) mit 10 bis 70 Gew.-% einpolymerisierten C₂- bis C₁₀-Alk-1-enen bestehen.

2. Verfahren nach Anspruch 1, dadurch gekennzeichnet, daß Copolymerisate des Propylens verwendet werden, die aus 10 bis 80 Gew.-% Polymerisat (A) und 20 bis 90 Gew.-% Copolymerisat (B) bestehen.

3. Verfahren nach den Ansprüchen 1 oder 2, dadurch gekennzeichnet, daß als C₂- bis C₁₀-Alk-1-en Ethylen verwendet wird.

4. Verfahren nach den Ansprüchen 1 bis 3, dadurch gekennzeichnet, daß ein Polymerisat des Propylens (A) mit 0,01 bis 4,5 Gew.-% einpolymerisierten C₂- bis C₁₀-Alk-1-enen verwendet wird.

5. Verfahren nach den Ansprüchen 1 bis 4, dadurch gekennzeichnet, daß als Copolymerisat des Propylens (B) ein Copolymerisat verwendet wird, das 20 bis 60 Gew.-% einpolymerisiertes Ethylen enthält.

6. Verfahren nach den Ansprüchen 1 bis 5, dadurch gekennzeichnet, daß Copolymerisate des Propylens mit einem DSC-Schmelzpunkt von 140 bis 155°C verwendet werden.

7. Verfahren nach den Ansprüchen 1 bis 6, dadurch gekennzeichnet, daß die Copolymerisate des Propylens mit 0,01 bis 5,0 Gew.-%, bezogen auf das Copolymerisat, eines Wärmestabilisators vermengt werden.

8. Verfahren nach den Ansprüchen 1 bis 7, dadurch gekennzeichnet, daß die Copolymerisate des Propylens mit 0,01 bis 5,0 Gew.-%, bezogen auf das Copolymerisat, eines Farbstoffpigments vermengt werden.

9. Verfahren nach den Ansprüchen 1 bis 8, dadurch gekennzeichnet, daß das Polypropylen zunächst bis zu einer maximalen mittleren Korngröße von bis zu 1,0 mm gemahlen wird, anschließend in eine Sinterform gebracht wird, wobei sich das Polypropylen durch Rotation der Form an der beheizten Formfläche verteilt und ablagert und danach gesintert, geliert, abgekühlt und durch Entformen aus der Form entnommen wird.

10. Verwendung der aus den Verfahren gemäß den Ansprüchen 1 bis 9 erhaltenen Polymerhäute als Überzugsmaterialien im Automobilbereich.

## Claims

1. A process for preparing polypropylene skins from polypropylene particles having a maximum mean grain size of up to 1.0 mm, characterized in that the polypropylene used comprises copolymers of propylene having a DSC melting point of from 135 to 165°C and a melt flow index of from 2 to 70 g/10 min at 230°C and under a load of 2.16 kg, which in turn comprise a polymer of propylene (A) having up to 5.0% by weight of C₂-C₁₀-1-alkenes incorporated by polymerization and a copolymer of propylene (B) having from 10 to 70% by weight of C₂-C₁₀-1--alkenes incorporated by polymerization.

2. The process as claimed in claim 1, characterized in that copolymers of propylene comprising from 10 to 80% by weight of polymer (A) and from 20 to 90% by weight of copolymer (B) are used.

3. The process as claimed in claim 1 or 2, characterized in that ethylene is used as C₂-C₁₀-1-alkene.

4. The process as claimed in any of claims 1 to 3, characterized in that a polymer of propylene (A) having from 0.01 to 4.5% by weight of C₂-C₁₀-1-alkenes incorporated by polymerization is used.

5. The process as claimed in any of claims 1 to 4, characterized in that as copolymer of propylene (B) a copolymer containing from 20 to 60% by weight of ethylene incorporated by polymerization is used.

6. The process as claimed in any of claims 1 to 5, characterized in that copolymers of propylene having a DSC melting point of from 140 to 155°C are used.

7. The process as claimed in any of claims 1 to 6, characterized in that the copolymers of propylene are blended with from 0.01 to 5.0% by weight, based on the copolymer, of a heat stabilizer.

8. The process as claimed in any of claims 1 to 7, characterized in that the copolymers of propylene are blended with from 0.01 to 5.0% by weight, based on the copolymer, of a color pigment.

9. The process as claimed in any of claims 1 to 8, characterized in that the polypropylene is first of all ground to a maximum mean grain size of up to 1.0 mm and is then introduced in a sintering mold, the polypropylene being distributed and deposited on the heated mold surface by rotating the mold, following which it is sintered, gelled, cooled and removed from the mold by demolding.

10. The use of the polymer skins obtained by the processes as claimed in any of claims 1 to 9, as coating materials in the automobile sector.

## Revendications

1. Procédé pour fabriquer des pellicules de polypropylène à partir de particules de polypropylène ayant une dimension de grain moyenne de 1,0 mm au maximum, caractérisé par le fait que l'on utilise, en tant que polypropylènes, des copolymères du propylène, ayant un point de fusion à la DSC de 135 à 165°C et un indice de fusion de 2 à 70 g/10 minutes à 230°C sous une charge de 2,16 kg, ces copolymères consistant eux-mêmes en un polymère du propylène (A) avec jusqu'à 5,0 % en poids d'alca-1-ènes en C2-C10 à l'état polymérisé et un copolymère du propylène (B) avec 10 à 70 % en poids d'alca-1-ènes en C2-C10 à l'état polymérisé.

2. Procédé selon la revendication 1, caractérisé par le fait que l'on utilise des copolymères du propylène consistant en 10 à 80 % en poids du polymère (A) et 20 à 90 % en poids du copolymère (B).

3. Procédé selon les revendications 1 ou 2, caractérisé par le fait que l'on utilise, en tant qu'alca-1-ène en C2-C10, l'éthylène.

4. Procédé selon les revendications 1 à 3, caractérisé par le fait que l'on utilise un polymère du propylène (A) contenant 0,01 à 4,5 % en poids d'alca-1-ènes en C2-C10 à l'état polymérisé.

5. Procédé selon les revendications 1 à 4, caractérisé par le fait que l'on utilise, en tant que copolymère du propylène (B), un copolymère contenant 20 à 60 % en poids d'éthylène à l'état polymérisé.

6. Procédé selon les revendications 1 à 5, caractérisé par le fait que l'on utilise des copolymères du propylène ayant un point de fusion à la DSC de 140 à 155°C.

7. Procédé selon les revendications 1 à 6, caractérisé par le fait que l'on mélange un stabilisant à la chaleur aux copolymères du propylène, en proportions de 0,01 à 5,0 % du poids du copolymère.

8. Procédé selon les revendications 1 à 7, caractérisé par le fait que l'on mélange un pigment coloré aux copolymères du propylène, en proportions de 0,01 à 5,0 % du poids du copolymère.

9. Procédé selon les revendications 1 à 8, caractérisé par le fait que l'on broie d'abord le polypropylène à une dimension de grain moyenne de 1,0 mm au maximum, on l'introduit ensuite dans un moule à fritter, dans lequel il est réparti par rotation du moule à la surface chauffée du moule où il se dépose puis fritte, gélifie, puis est refroidi et démoulé.

10. Utilisation des pellicules de polymères obtenues par les procédés selon les revendications 1 à 9 en tant que matières d'habillage et de revêtement dans l'industrie de l'automobile.
